# DEMANDE DE BREVET EUROPEEN

(11) **EP 3 564 475 A1**
(43) Date de publication de la demande: **06.11.2019**
(21) Numéro de dépôt: 19171506.9
(22) Date de dépôt: 29.04.2019
(51) Int. Cl.: E06B 9/68, H02P 5/74, H04B 1/00

(54) **SYSTEME DE GESTION DE GROUPES DE DISPOSITIFS D'OCCULTATION D'UN BATIMENT**

(30) Priorité: 02.05.2018 FR 1853763
(71) Demandeur: Delta Dore, 35270 Bonnemain (FR)
(72) Inventeur: GENTIL, Marc, 35270 BONNEMAIN (FR); ARBONA, Carole, 35270 BONNEMAIN (FR); BERHAULT, Gilles, 35270 BONNEMAIN (FR)
(74) Mandataire: Cabinet Le Guen Maillet

(57) **Abrégé**

L'invention concerne un système de gestion de groupes de dispositifs d'occultation d'un bâtiment, chaque dispositif d'occultation étant relié par l'intermédiaire d'un module de commande à un double bouton poussoir, chaque module de commande recevant en outre des commandes d'un fil pilote. Le système comporte au moins un premier, un second et un troisième modules de gestion de groupes de dispositifs d'occultation (Cc₁₂₃, Cc₁₂, Cc₂₃), le premier module de gestion de groupes de dispositifs d'occultation (Cc₁₂₃) étant relié au second et au troisième modules de gestion de groupes de dispositifs d'occultation (Cc₁₂, Cc₂₃), les premier et second signaux du fils pilote générés par le second module de gestion de groupes de dispositifs d'occultation étant transmis au premier module de gestion de groupes de dispositifs d'occultation qui comporte des moyens de blocage des premier et second signaux du fils pilote générés par le second module de gestion de dispositifs d'occultation vers le troisième module de gestion de dispositifs d'occultation.

## Description

La présente invention concerne un système de gestion de groupes de dispositifs d'occultation d'un bâtiment.

Dans un bâtiment, par exemple une habitation telle qu'une maison, il est proposé d'avoir des systèmes qui permettent de commander tout ou partie des dispositifs d'occultation de la maison à partir d'une unique commande.

Par exemple, pour une maison composée de plusieurs étages, il est aussi intéressant de pouvoir commander l'ensemble des dispositifs d'occultation des ouvertures d'un étage à partir d'une unique commande. Les dispositifs d'occultation des ouvertures d'un étage ou de chaque étage forment ainsi des groupes de dispositifs d'occultation.

De même, il est aussi intéressant de pouvoir commander l'ensemble des dispositifs d'occultation des ouvertures d'une pièce, par exemple d'un séjour salon, à partir d'une unique commande. Les dispositifs d'occultation des ouvertures de la pièce forment aussi un groupe de dispositifs d'occultation.

Il est aussi souhaitable, en outre de tels systèmes de gestion de groupes de dispositifs d'occultation d'un bâtiment, de disposer, par chaque dispositif d'occultation, d'une commande propre au dispositif d'occultation.

Des solutions utilisant le médium de transmission radio pour effectuer de telles commandes de groupe de dispositif d'occultation existent.

Les solutions utilisant la technologie radio sont bien souvent plus coûteuses que des solutions filaires.

L'utilisation de fils pilotes existe aussi dans la gestion des équipements d'une habitation et est une solution moins coûteuse que la technologie radio mais qui nécessite un câblage particulier, parfois complexe dans sa mise en oeuvre.

La présente invention a pour but de proposer un système de gestion de groupes de dispositifs d'occultation d'un bâtiment basé sur la technologie de fil pilote qui soit simple à câbler.

A cette fin, selon un premier aspect, l'invention propose un système de gestion de groupes de dispositifs d'occultation d'un bâtiment, chaque dispositif d'occultation étant relié par l'intermédiaire d'un module de commande à un double bouton poussoir, un appui sur un premier bouton poussoir du double bouton poussoir générant un signal sur une première entrée du module de commande, un appui sur un second bouton poussoir du double bouton poussoir générant un signal sur une seconde entrée du module de commande, le module de commande recevant en outre des commandes de montée ou de descente du dispositif d'occultation par l'intermédiaire d'un fil pilote, un premier signal du fil pilote étant associé à la montée du dispositif d'occultation, un second signal, différent du premier signal étant associé à la descente du dispositif d'occultation, caractérisé en ce que le système comporte au moins un premier, un second et un troisième modules de gestion de groupes de dispositifs d'occultation, le premier module de gestion de groupes de dispositifs d'occultation étant relié au second et au troisième modules de gestion de groupes de dispositifs d'occultation, chaque module de gestion de groupes de dispositifs d'occultation est relié à un double bouton poussoir, un appui sur un premier bouton poussoir du double bouton poussoir relié au module de gestion de groupes de dispositifs d'occultation générant un signal sur une première entrée du module de gestion de groupes de dispositifs d'occultation, le module de gestion de groupes de dispositifs d'occultation comportant des moyens de modification du signal sur la première entrée pour générer le premier signal du fil pilote, un appui sur un second bouton poussoir du double bouton poussoir générant un signal sur une seconde entrée du module de gestion de groupes de dispositifs d'occultation, le module de gestion de groupes de dispositifs d'occultation comportant des moyens de modification du signal sur la première entrée pour générer le second signal du fil pilote, les premier et second signaux du fils pilote générés par le premier module de gestion de groupes de dispositifs d'occultation étant transmis au second et troisième modules de gestion de groupes de dispositifs d'occultation, les premier et second signaux du fils pilote générés par le second module de gestion de groupes de dispositifs d'occultation étant transmis au premier module de gestion de groupes de dispositifs d'occultation et le premier module de gestion de groupes de dispositifs d'occultation comporte des moyens de blocage des premier et second signaux du fils pilote générés par le second module de gestion de dispositifs d'occultation vers le troisième module de gestion de dispositifs d'occultation et des moyens de blocage des premier et second signaux du fils pilote générés par le troisième module de gestion de dispositifs d'occultation vers le second module de gestion de dispositifs d'occultation.

Ainsi, le câblage du système de gestion de groupes de dispositifs d'occultation d'un bâtiment est simple à réaliser. En utilisant des modules de gestion de dispositifs d'occultation identiques, l'installation du système est simple à réaliser tout en autorisant un grand nombre de possibilités de formation de groupes de dispositifs d'occultation.

Selon un mode particulier de l'invention, les signaux générés par un appui sur le premier ou le second bouton de chaque bouton poussoir sont des signaux d'alternance positive et négative et les signaux du fil pilote associés à la montée ou à la descente du dispositif d'occultation sont des signaux mono alternance.

Ainsi, les signaux du fil pilote sont simples à réaliser.

Selon un mode particulier de l'invention, les moyens de blocage des premier et second signaux du fils pilote générés par le troisième module de gestion de dispositifs d'occultation vers le second module de gestion de dispositifs d'occultation sont constitués d'un couple de diodes et les moyens de blocage des premier et second signaux du fils pilote générés par le second module de gestion de dispositifs d'occultation vers le troisième module de gestion de dispositifs d'occultation sont constitués d'un couple de diodes.

Ainsi, la réalisation des modules de gestion de dispositifs d'occultation est simple et permet d'obtenir des modules de gestion de dispositifs d'occultation de faible encombrement.

Selon un mode particulier de l'invention, pour chaque couple de diode, une anode d'une première diode est reliée à la première entrée du module de gestion de groupes de dispositifs d'occultation, une cathode de la première diode est reliée au second ou au troisième module de gestion de dispositifs d'occultation, une cathode de la première diode est reliée à la première entrée du module de gestion de groupes de dispositifs d'occultation et une anode de la première diode est reliée à la cathode de la première diode.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un bâtiment dans lequel la présente invention est implémentée ;
la Fig. 2 représente une vue générale des interconnexions électriques du système de gestion de groupes de dispositifs d'occultation d'un bâtiment selon la présente invention ;
la Fig. 3 représente le schéma électrique de chaque dispositif de gestion d'au moins un groupe de dispositifs d'occultation d'un bâtiment selon la présente invention ;
la Fig. 4 représente un premier exemple des interconnexions électriques du système de gestion de groupes de dispositifs d'occultation d'un bâtiment ainsi que des signaux électriques transmis dans le système de gestion de groupes de dispositifs d'occultation d'un bâtiment selon la présente invention ;
la Fig. 5 représente un second exemple des interconnexions électriques du système de gestion de groupes de dispositifs d'occultation d'un bâtiment ainsi que des signaux électriques transmis dans le système de gestion de groupes de dispositifs d'occultation d'un bâtiment selon la présente invention.

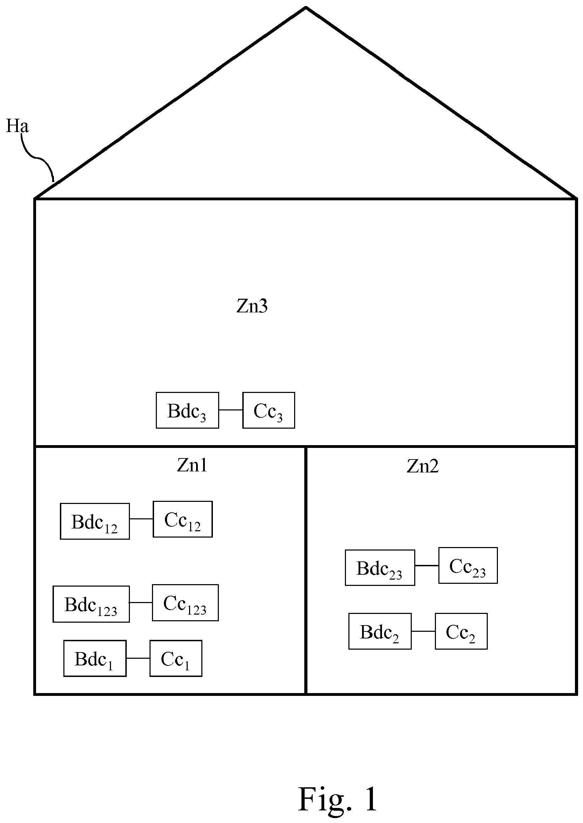

La **Fig. 1** représente un bâtiment dans lequel la présente invention est implémentée.

La Fig. 1 représente un bâtiment tel qu'une maison Ha comportant deux étages et est divisée en trois zones Zn1, Zn2 et Zn3 dans lesquelles sont disposés des dispositifs d'occultation non représentés en Fig. 1.

Par exemple, la zone Zn1, située au rez-de-chaussée, comprend une entrée, une cuisine, un salon un séjour, la zone Zn2, située au rez-de-chaussée, comprend une ou plusieurs chambres, un bureau et la zone Zn3 comporte l'ensemble des pièces du second étage.

Dans la zone Zn1 de la Fig. 1, un module de gestion de groupes de dispositifs d'occultation Cc₁₂₃ gère l'ensemble des dispositifs d'occultation des zones Zn1, Zn2 et Zn3, un module de gestion de groupes de dispositifs d'occultation Cc₁₂ gère l'ensemble des dispositifs d'occultation des zones Zn1 et Zn2 et un module de gestion de groupes de dispositifs d'occultation Cc₁ gère l'ensemble des dispositifs d'occultation de la zone Zn1.

Dans la zone Zn2 de la Fig. 1, un module de gestion de groupes de dispositifs d'occultation CC₂₃ gère l'ensemble des dispositifs d'occultation des zones Zn2 et Zn3 et un module de gestion de groupes de dispositifs d'occultation Cc₂ gère l'ensemble des dispositifs d'occultation de la zone Zn2.

Dans la zone Zn3 de la Fig. 1, un module de gestion de groupes de dispositifs d'occultation Cc₃ gère l'ensemble des dispositifs d'occultation de la zone Zn3.

Le module de gestion de groupes de dispositifs d'occultation Cc₁₂₃ est relié à un double bouton poussoir Bdc₁₂₃, le module de gestion de groupes de dispositifs d'occultation Cc₁₂ est relié à un double bouton poussoir Bdc₁₂, le module de gestion de groupes de dispositifs d'occultation Cc₁ est relié à un double bouton poussoir Bdc₁, le module de gestion de groupes de dispositifs d'occultation Cc₂₃ est relié à un double bouton poussoir Bdc₂₃, le module de gestion de groupes de dispositifs d'occultation Cc₂ est relié à un double bouton poussoir Bdc₂ et le module de gestion de groupes de dispositifs d'occultation Cc₃ est relié à un double bouton poussoir Bdc₃.

Il est à remarquer ici que les modules de gestion de groupes de dispositifs d'occultation disposent de trois entrées sorties. Bien entendu, un module de gestion de groupes de dispositifs d'occultation peut comporter deux ou plus de deux entrées sorties.

De même, plusieurs modules de gestion de groupes de dispositifs d'occultation peuvent être reliés à un même double bouton poussoir de manière à pouvoir adapter le câblage à la configuration du bâtiment et aux besoins des usagers du bâtiment.

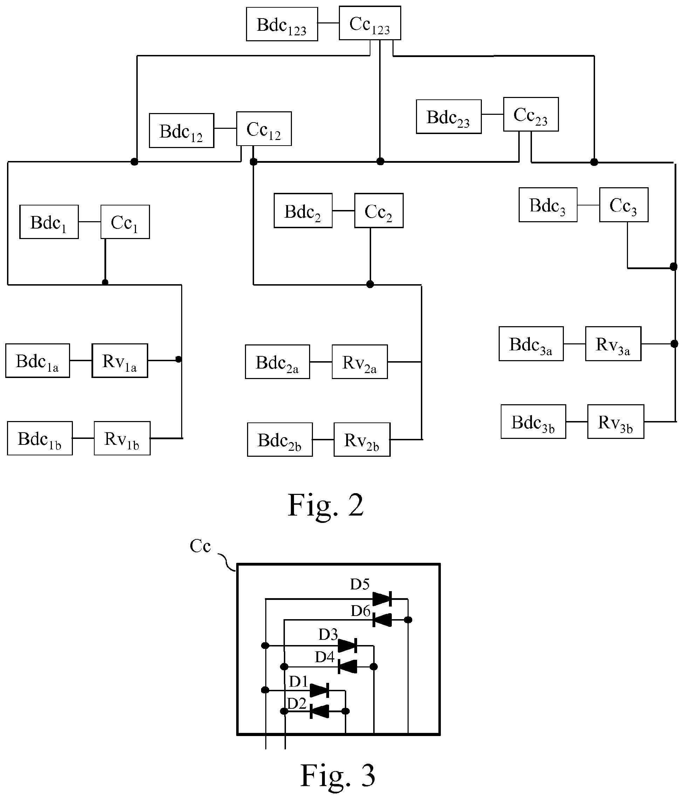

La **Fig. 2** représente une vue générale des interconnexions électriques du système de gestion de groupes de dispositifs d'occultation d'un bâtiment selon la présente invention.

Dans l'exemple de la Fig. 2, une première entrée sortie du module de gestion de groupes de dispositifs d'occultation Cc₁₂₃ est reliée à une première entrée sortie du module de gestion de groupes de dispositifs d'occultation Cc₁₂, à une première entrée sortie du module de gestion de groupes de dispositifs d'occultation Cc₁, à l'entrée fil pilote d'un module de commande Rv₁ₐ relié à un double bouton poussoir Bdc₁ₐ et à l'entrée fil pilote d'un module de commande Rv_{1b} relié à un double bouton poussoir Bdc_{1b}.

Une seconde entrée sortie du module de gestion de groupes de dispositifs d'occultation Cc₁₂₃ est reliée à une seconde entrée sortie du module de gestion de groupes de dispositifs d'occultation Cc₁₂, à une seconde entrée sortie du module de gestion de groupes de dispositifs d'occultation Cc₂, à l'entrée fil pilote d'un module de commande Rv₂ₐ relié à un double bouton poussoir Bdc₂ₐ et à l'entrée fil pilote d'un module de commande Rv_{2b} relié à un double bouton poussoir Bdc_{2b} et à une seconde entrée sortie du module de gestion de groupes de dispositifs d'occultation Cc₂₃.

Une troisième entrée sortie du module de gestion de groupes de dispositifs d'occultation Cc₁₂₃ est reliée à une troisième entrée sortie du module de gestion de groupes de dispositifs d'occultation Cc₂₃, à une troisième entrée sortie du module de gestion de groupes de dispositifs d'occultation Cc₃, à l'entrée fil pilote d'un module de commande Rv₃ₐ relié à un double bouton poussoir Bdc₃ₐ et à l'entrée fil pilote d'un module de commande Rv_{3b} relié à un double bouton poussoir Bdc_{3b}.

La **Fig. 3** représente le schéma électrique de chaque dispositif de gestion d'au moins un groupe de dispositifs d'occultation d'un bâtiment selon la présente invention.

Dans l'exemple de la Fig. 3, chaque dispositif de gestion d'au moins un groupe de dispositifs d'occultation comporte autant de paires de diodes que de groupes de dispositif d'occultation qu'il peut gérer.

Dans l'exemple de la Fig. 3, chaque dispositif de gestion d'au moins un groupe de dispositifs d'occultation comporte trois paires de diodes permettant de gérer trois groupes de dispositif d'occultation.

Pour chaque paire de diodes, une anode d'une première diode est reliée à la première entrée du module de gestion de groupes de dispositifs d'occultation, une cathode de la première diode est reliée à une première entrée sortie du dispositif de gestion d'au moins un groupe de dispositifs d'occultation et à une anode d'une seconde diode, une cathode de la seconde diode est reliée à une seconde entrée du module de gestion de groupes de dispositifs d'occultation.

La première entrée est reliée à un premier bouton poussoir d'un double bouton poussoir et la seconde entrée est reliée à un second bouton poussoir du double bouton poussoir.

L'anode de la diode D1 est reliée à la première entrée du module de gestion de groupes de dispositifs d'occultation, la cathode de la diode D1 est reliée à la première entrée sortie du dispositif de gestion d'au moins un groupe de dispositifs d'occultation et à l'anode de la diode D2, la cathode de la diode D2 est reliée à la seconde entrée du module de gestion de groupes de dispositifs d'occultation.

L'anode de la diode D3 est reliée à la première entrée du module de gestion de groupes de dispositifs d'occultation, la cathode de la diode D3 est reliée à la première entrée sortie du dispositif de gestion d'au moins un groupe de dispositifs d'occultation et à l'anode de la diode D4, la cathode de la diode D4 est reliée à la seconde entrée du module de gestion de groupes de dispositifs d'occultation.

L'anode de la diode D5 est reliée à la première entrée du module de gestion de groupes de dispositifs d'occultation, la cathode de la diode D5 est reliée à la première entrée sortie du dispositif de gestion d'au moins un groupe de dispositifs d'occultation et à l'anode de la diode D6, la cathode de la diode D6 est reliée à la seconde entrée du module de gestion de groupes de dispositifs d'occultation.

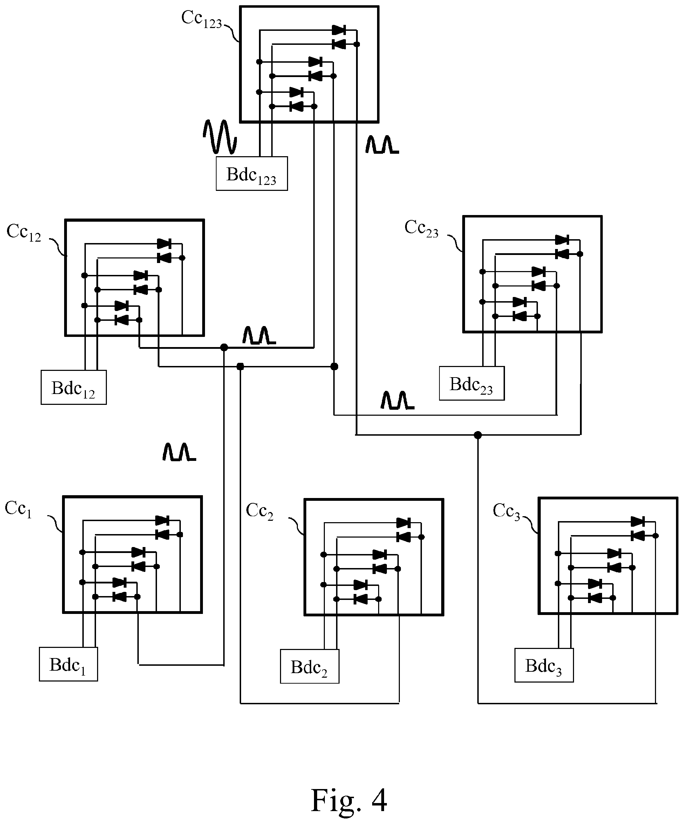

La **Fig. 4** représente un premier exemple des interconnexions électriques du système de gestion de groupes de dispositifs d'occultation d'un bâtiment ainsi que des signaux électriques transmis dans le système de gestion de groupes de dispositifs d'occultation d'un bâtiment selon la présente invention.

Dans l'exemple de la Fig. 4, un appui est effectué sur un bouton poussoir du double bouton poussoir Bdc₁₂₃ et un signal double alternance est présent sur une entrée du module de gestion de groupes de dispositifs d'occultation Cc₁₂₃.

Un signal mono alternance est présent sur les première, seconde et troisième entrées sorties du module de gestion de groupes de dispositifs d'occultation Cc₁₂₃. Le signal mono alternance est présent sur les première et seconde entrées sorties du module de gestion de groupes de dispositifs d'occultation Cc₁₂, sur les seconde et troisième entrées sorties du modules de gestion de groupes de dispositifs d'occultation Cc₂₃, sur la première entrée sortie du module de gestion de groupes de dispositifs d'occultation Cc₁, sur la seconde entrée sortie du module de gestion de groupes de dispositifs d'occultation Cc₂ sur la troisième entrée sortie du module de gestion de groupes de dispositifs d'occultation Cc₃.

Ainsi, un appui sur un bouton poussoir du double bouton poussoir Bdc₁₂₃ commande l'ouverture ou la fermeture de chaque dispositif d'occultation.

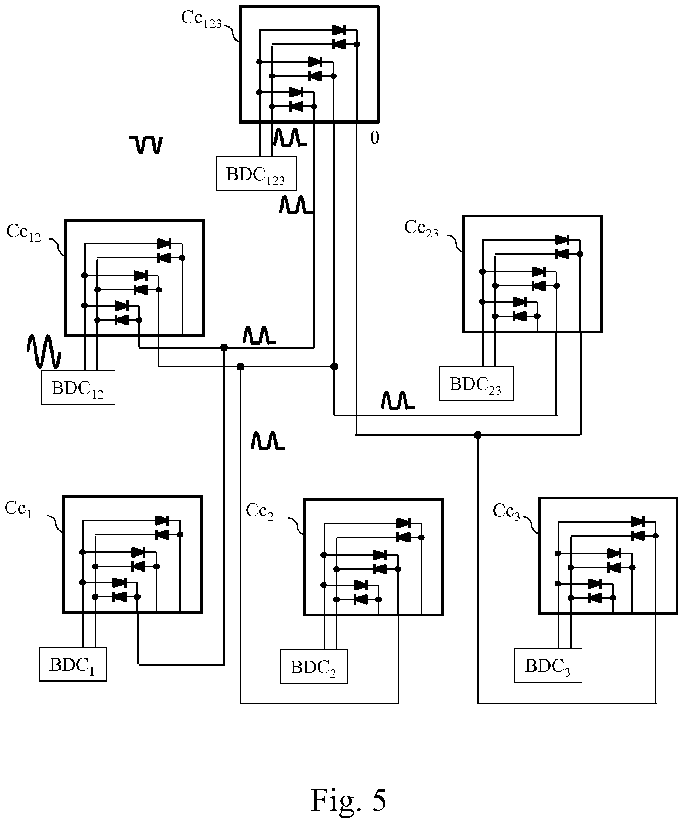

La **Fig. 5** représente un second exemple des interconnexions électriques du système de gestion de groupes de dispositifs d'occultation d'un bâtiment ainsi que des signaux électriques transmis dans le système de gestion de groupes de dispositifs d'occultation d'un bâtiment selon la présente invention.

Dans l'exemple de la Fig. 5, un appui est effectué sur un bouton poussoir du double bouton poussoir Bdc₁₂ et un signal double alternance est présent sur une entrée du module de gestion de groupes de dispositifs d'occultation Cc₁₂.

Un signal mono alternance est présent sur les première, seconde et troisième entrées sorties du module de gestion de groupes de dispositifs d'occultation Cc₁₂ ainsi que sur les première et seconde entrées sorties du module de gestion de groupes de dispositifs d'occultation Cc₁₂₃, sur la seconde entrée sortie du module de gestion de groupes de dispositifs d'occultation Cc₂₃, sur la seconde entrée sortie du module de gestion de groupes de dispositifs d'occultation Cc₂ et sur la première entrée sortie du module de gestion de groupes de dispositifs d'occultation Cc₁.

Le signal mono alternance présent sur les première et seconde entrées sorties du module de gestion de groupes de dispositifs d'occultation Cc₁₂₃ est bloqué par le couple de diodes du module de gestion de groupes de dispositifs d'occultation Cc₁₂₃ et empêche le signal mono alternance de se propager sur la troisième entrée sortie du module de gestion de groupes de dispositifs d'occultation Cc₁₂₃.

Ainsi, un appui sur un bouton poussoir du double bouton poussoir Bdc₁₂ commande l'ouverture ou la fermeture de chaque dispositif d'occultation hormis les dispositifs d'occultation reliés à la troisième entrée sortie du module de gestion de groupes de dispositifs d'occultation Cc₁₂₃.

Bien entendu, la présente invention n'est nullement limitée aux modes de réalisation décrits ici, mais englobe, bien au contraire, toute variante à la portée de l'homme du métier.

## Revendications

1. Système de gestion de groupes de dispositifs d'occultation d'un bâtiment, chaque dispositif d'occultation étant relié par l'intermédiaire d'un module de commande à un double bouton poussoir, un appui sur un premier bouton poussoir du double bouton poussoir générant un signal sur une première entrée du module de commande, un appui sur un second bouton poussoir du double bouton poussoir générant un signal sur une seconde entrée du module de commande, le module de commande recevant en outre des commandes de montée ou de descente du dispositif d'occultation par l'intermédiaire d'un fil pilote, un premier signal du fil pilote étant associé à la montée du dispositif d'occultation, un second signal, différent du premier signal étant associé à la descente du dispositif d'occultation, **caractérisé en ce que** le système comporte au moins un premier, un second et un troisième modules de gestion de groupes de dispositifs d'occultation (Cc₁₂₃, Cc₁₂, Cc₂₃), le premier module de gestion de groupes de dispositifs d'occultation (Cc₁₂₃) étant relié au second et au troisième modules de gestion de groupes de dispositifs d'occultation (Cc₁₂, Cc₂₃), chaque module de gestion de groupes de dispositifs d'occultation est relié à un double bouton poussoir (BDC₁₂₃, BDC₁₂, BDC₂₃), un appui sur un premier bouton poussoir du double bouton poussoir relié au module de gestion de groupes de dispositifs d'occultation générant un signal sur une première entrée du module de gestion de groupes de dispositifs d'occultation, le module de gestion de groupes de dispositifs d'occultation comportant des moyens de modification du signal sur la première entrée pour générer le premier signal du fil pilote, un appui sur un second bouton poussoir du double bouton poussoir générant un signal sur une seconde entrée du module de gestion de groupes de dispositifs d'occultation, le module de gestion de groupes de dispositifs d'occultation comportant des moyens de modification du signal sur la première entrée pour générer le second signal du fil pilote, les premier et second signaux du fils pilote générés par le premier module de gestion de groupes de dispositifs d'occultation étant transmis au second et troisième modules de gestion de groupes de dispositifs d'occultation, les premier et second signaux du fils pilote générés par le second module de gestion de groupes de dispositifs d'occultation étant transmis au premier module de gestion de groupes de dispositifs d'occultation et le premier module de gestion de groupes de dispositifs d'occultation comporte des moyens de blocage des premier et second signaux du fils pilote générés par le second module de gestion de dispositifs d'occultation vers le troisième module de gestion de dispositifs d'occultation et des moyens de blocage des premier et second signaux du fils pilote générés par le troisième module de gestion de dispositifs d'occultation vers le second module de gestion de dispositifs d'occultation, les signaux générés par un appui sur le premier ou le second bouton de chaque bouton poussoir sont des signaux d'alternance positive et négative et les signaux du fil pilote associés à la montée ou à la descente du dispositif d'occultation sont des signaux mono alternance., les moyens de blocage des premier et second signaux du fils pilote générés par le troisième module de gestion de dispositifs d'occultation vers le second module de gestion de dispositifs d'occultation sont constitués d'un couple de diodes et les moyens de blocage des premier et second signaux du fils pilote générés par le second module de gestion de dispositifs d'occultation vers le troisième module de gestion de dispositifs d'occultation sont constitués d'un couple de diodes et, pour chaque couple de diode, une anode d'une première diode est reliée à la première entrée du module de gestion de groupes de dispositifs d'occultation, une cathode de la première diode est reliée au second ou au troisième module de gestion de dispositifs d'occultation, une cathode de la première diode est reliée à la première entrée du module de gestion de groupes de dispositifs d'occultation et une anode de la première diode est reliée à la cathode de la première diode.
